# EUROPÄISCHE PATENTSCHRIFT

(11) **EP 0 774 225 B1**
(45) Veröffentlichungstag und Bekanntmachung des Hinweises auf die Patenterteilung: **09.12.1998**
(21) Anmeldenummer: 96116305.2
(22) Anmeldetag: 11.10.1996
(51) Int. Cl.: A47J 27/09

(54) **Ventil**
Valve
Soupape

(30) Priorität: 15.11.1995 DE 29518107 U
(43) Veröffentlichungstag der Anmeldung: 21.05.1997
(73) Patentinhaber: HEINRICH BAUMGARTEN KG SPEZIALFABRIK FÜR BESCHLAGTEILE, 57290 Neunkirchen (DE)
(72) Erfinder: Fischbach, Wolfgang, 57567 Daaden (DE)
(74) Vertreter: Missling, Arne, Dipl.-Ing.

(56) Entgegenhaltungen:
- BE-A- 495 827
- CH-A- 398 922
- DE-A- 1 925 264
- DE-U- 9 410 528
- GB-A- 663 780
- GB-A- 2 123 528
- US-A- 2 670 755

## Beschreibung

Die Erfindung betrifft ein Ventil für ein mit Überdruck betriebenes, mit einem Deckel verschließbares Kochgefäß oder dergleichen, beispielsweise einen_Dampfdrucktopf, mit einem Ventilkörper, der in einer in dem Deckel befindlichen Ventilöffnung, mit dieser achsfluchtend und -beweglich, angeordnet ist und die verschiedenen Betriebszustände des Kochgefäßes anzeigt, steuert und überwacht. Ein Ventil gemäß dem Oberbegriff des Anspruchs 1 ist aus der US-A-2670755 bekannt.

Es ist seit langem bekannt, in einem Dampfdrucktopf einen von dem in dem Kochgefäß herrschenden Druck gegen eine Rückstellkraft axial verstellbaren Anzeigestift anzuordnen, der in einer Durchführung in der Gefäßwand des Kochgefäßes, insbesondere in dem Deckel, so verschiebbar ist, daß er bei zunehmendem Druck aus dem Kochgefäß ausgetrieben wird, so daß die Länge des Anzeigestiftes über der Gefäßwand den Druck in dem Kochgefäß veranschaulicht. Ventile mit einem solchen Anzeigestift sind seit langem in großem Umfang in Gebrauch. Auf dem Anzeigestift befinden sich in der Regel mehrere, gegebenenfalls unterschiedlichen Rückstellkräften zugeordnete und zumeist eingefärbte Ringrillen, die zur Beobachtung des Druckes dienen. Ein solches Ventil besteht dabei aus mehreren metallischen Einzelteilen und zugehörigen gummielastischen Dichtelementen; obwohl es sich bei dem Metallteilen außer bei der Rückstellfeder um spanend herzustellende Drehteile handelt, die auf Automaten angefertigt werden können, ist der Aufwand für die Anfertigung und den Zusammenbau eines solchen Ventils beträchtlich. Die Metallteile müssen physiologisch unbedenklich sein und aus einem entsprechenden, zumeist oberflächenveredelten Werkstoff bestehen, so daS sich die Herstellung des Ventils weiter verteuert.

Diese Ventile dienen außer zu der Anzeige des Druckes in dem Innenraum des Kochgefäßes auch zu dessen Regelung, indem sie während des Kochvorganges bei zu hohem Druck entlüften und damit einen maximalen Druck einregeln. Eine derartige Entlüftung ist auch bei Betriebsbeginn des Kochgefäßes erwünscht, um die über dem Kochgut befindliche Luft durch Wasserdampf zu ersetzen; wird der Betriebsdruck des Kochgefäßes annähernd erreicht, muß die Strömungsverbindung des Innenraumes mit der Umgebung dann unterbrochen werden. Der Anzeigestift kann von Hand in eine Stellung gebracht werden, in der der Innenraum des Kochgefäßes entlüftet und drucklos gemacht werden kann, so daß der Deckel ohne Risiko entfernbar ist.

Die bekannten Ventile sind nur umständlich zu reinigen und zu warten; zumeist müssen sie zu diesem Zweck in ihre Bestandteile zerlegt werden, passendes Werkzeug und handwerkliches Geschick sind erforderlich.

Es ist deshalb entsprechend dem Gebrauchsmuster 295 01 112.2 auch schon vorgeschlagen worden, ein solches Ventil wesentlich einfacher dadurch auszugestalten, daß es außer dem Anzeigestift für das Druckniveau nur noch aus einem einzigen Bauelement besteht, das aus einem gummielastischen Werkstoff hergestellt ist und gleichwohl eine Vielzahl von Funktionen auszuführen gestattet. Von dem Anzeigestift abgesehen, besteht dabei das Ventil im günstigsten Fall nur mehr aus einem einzigen Haltestück, dessen Elastizität ausreicht, um es ohne zusätzliche Bauelemente, etwa einer Schraubverbindung oder dergleichen, an der Gefäßwand befestigen zu können, bei Überlastung von dem Innendruck des Kochgefäßes her den Anzeigestift durch die hintere Stirnwand zu treiben, bis der Steuerflansch an dem äußeren Anschlag anliegt, und auch den Anzeigestift in der Gegenrichtung, wiederum unter Überwindung der hinteren Stirnwand, manuell in seine vorige Betriebsstellung zurückzustellen.

Aus der Patentanmeldung GB 2 123 528 A ist es ferner bekannt, einen Ventilkörper so auszubilden, daß ein an dem Ventilkörper ausgebildeter Steuerkolben eine Ventilöffnung steuert, die in einem formelastischen Ventilsitz vorgesehen ist, welcher in einer Ausnehmung des Deckels eines Kochgefäßes vorgesehen ist. Bei zunehmendem, den Betriebsdruck übersteigenden Druck in dem Kochgefäß dem Deckel wird der Ventilkörper schließlich unter Mitnahme des Ventilsitzes soweit aus dem Kochgefäß ausgetrieben, bis ein an ihm ausgebildetes, formstabiles Anschlagstück an dem Deckel anliegt, dabei dessen Ausnehmung abdeckend. Hierbei sind demzufolge zur Durchführung aller erforderlichen Funktionen zwei aus ganz verschiedenen Werkstoffen bestehende Bau- und Funktionsteile erforderlich.

Die Erfindung hat sich die Aufgabe gesellt, ein solches Ventil leicht herstellbar und noch viel einfacher auszugestalten und dabei gleichwohl alle bisher damit ausgeübten Funktionen beizubehalten.

Erfindungsgemäß wird die Aufgabe bei einem eingangs näher bezeichneten Ventil dadurch gelöst, daß der Ventilkolben mit Mitteln zur Druckanzeige versehenen ist, und zumindest der Regelkragen aus einem elastischen Werkstoff besteht.

Ein solcher Ventilkörper kann ohne weiteres aus einem Stück bestehen, so daß nicht nur seine Herstellung denkbar einfach ist, sondern auch Kosten für Montagearbeiten nicht mehr anfallen. Dabei bietet die erfindungsgemäße Ausführung die Grundlage, daß der Ventilkörper zusammen mit der Ventilöffnung sämtliche erforderlichen Funktionen auszuführen in der Lage ist, die sonst nur von mehreren Bauteilen oder gar mit mehreren gesondert arbeitenden Baugruppen erledigt werden können. Insbesondere kann der Regelkragen wegen seiner Elastizität einen weiten Bereich des Beriebsdruckes regeltechnisch erfassen, wobei die Formänderung an dem Regelkragen als Rückstellkraft dient. Der Ventilkörper kann durch zweckentsprechende Gestaltung sowohl das Ankochen steuern, nachdem die in dem Kochgefäß zunächst vorhandene Luft durch Wasserdampf ersetzt worden ist, als auch bei unzulässigem Überdruck als Sicherheitsventil arbeiten.

Die Wirkungsweise des Ventils als Druckanzeiger ist besonders effizient, wenn die Ventilöffnung außerhalb des Kochgefäßes von einer an dem Deckel befestigten und von diesem beabstandeten Führung für den Ventilkörper überfangen ist, die eine zu der Ventilöffnung achsfluchtende kreiszylindrische Lagerbohrung für den Ventilkolben aufweist und deren Lochlaibung als Indikator für den drucklosen Zustand des Kochgefäßes dient. Eine solche Führung ist leicht und billig beispielsweise als an dem Deckel durch Punktschweißen befestigtes Blech- bzw. Kunststoffteil herstell- und anbringbar und dient nicht nur als Gleitlagerung für den Ventilkolben, sondern verhindert auch, daß aus dem Ventil abblasender Dampf nach oben entweicht: vielmehr trifft der Abdampf auf die Führung und wird seitlich abgelenkt, so daß keine Gefahr besteht, daß bei der Handhabung des Kochgefäßes die Hände der Bedienungsperson verbrüht werden. Besonders deutlich gekennzeichnet wird dabei ein druckloser Zustand im Inneren des Kochgefäßes, beispielsweise nach dem Entlüften über das Ventil, wenn die Lochlaibung mit einer Farbmarkierung versehen ist.

Der im Inneren des Kochgefäßes herrschende Betriebsdruck kann veranschaulicht und angezeigt werden, wenn an dem Ventilkolben in an sich bekannter Weise umlaufende Ringrillen oder ähnliche Markierungen angebracht sind.

Die Regelung des Innendruckes in dem Kochgefäß erfolgt vor allem dadurch, daß Dampf über das Ventil entweichen kann. Ein stetiger Regelvorgang wird dabei insbesondere befördert, wenn der Ventilkolben in Richtung auf das Kochgefäß eine als Regelkante dienende, vorzugsweise kegelstumpfförmige Einziehung aufweist, die mit der Ventilöffnung zusammenwirkt. Die Einziehung kann auch anders ausgeformt und mit einer speziellen Steuerkante ausgerüstet werden; entsprechende Einzelheiten sind aus dem Stand der Technik geläufig. Es ist dabei günstig, wenn auch bei an der Ventilöffnung angeschlagenem Ventilkolben eine Strömungsverbindung zwischen dem Inneren des Kochgefäßes und der Umwelt bestehen bleibt; das ist in einfacher Weise möglich, wenn der Ventilkolben im Bereich der Einziehung mit mindestens einer an seinem Umfang achsparallel verlaufenden Ausnehmung versehen ist, die eine solche Strömungsverbindung ausbildet. Bis zum Verschluß der Ventilöffnung durch die Regelkante bei ansteigendem Druck in dem Kochgefäß kann beim Ankochen die Luft entweichen und wird durch Wasserdampf ersetzt. Andererseits ist auf diese Weise auch sichergestellt, daß beim Abkühlen des Kochgefäßes, beispielsweise in einem Wasserbad, ein Unterdruck in dem Kochgefäß sicher vermieden wird.

Eine besonders bevorzugte Ausführung der Erfindung besteht darin, daß der Regelkragen in Form eines ungestört umlaufenden, im entlasteten Zustand von der Symmetrieachse des Ventilkörpers schräg nach außen gerichteten, unter einem Überdruck in dem Kochgefäß elastisch verformbaren Lippendichtringes an dem Ventilkörper angeformt ist, dessen Dichtlippe in eine an den Deckel anlegbare, die Ventilöffnung dabei von dem Inneren des Kochgefäßes strömungstechnisch trennende Ringkante ausläuft.

Der Regelkragen wird bei zunehmendem Druck verformt und liegt schließlich flächig an dem Deckel an. Die zunehmende Verformung und eine dementsprechende Steigerung des Druckes ist an der Stellung des Ventilkolbens und insbesondere seiner Ringrillen ablesbar.

Es ist zweckmäßig, wenn das Anschlagstück an der in dem Inneren des Kochgefäßes befindlichen Stirnseite des Ventilkörpers als die Ventilöffnung abdeckende Platte ausgebildet ist, so daß der Ventilkörper sicher in der Ventilöffnung gehalten wird, auch wenn der Regelkragen diese passiert hat und sich außerhalb des Kochgefäßes befindet. Ein weiterer Anstieg des Druckes wird dadurch verhindert, daß das Anschlagstück mit mindestens einer an seinem Umfang achsparallel verlaufenden Ausnehmung versehen ist, die eine Strömungsverbindung des Kochgefäßes mit der Umgebung bei an der Ventilöffnung anliegendem Anschlagstück ausbildet.

Die erfindungsgemäße Ausführung des Ventils stellt die Möglichkeit sicher, daß der Ventilkörper durchweg aus einem oder mehreren elastischen Werkstoffen besteht. Besonders wirtschaftlich ist es dabei zweifellos, wenn der Ventilkörper aus einem elastischen Werkstoff angefertigt wird, höchstens in Teilen, beispielsweise an dem Anschlagstück, durch eine im Inneren des Ventilkörpers vorgesehene Bewehrung aus einem formstabilen Werkstoff ergänzt, um örtlich eine Formänderung zu verhindern.

Besonders bei einer einstückigen, homogen aus dem gleichen Werkstoff bestehenden Ausbildung des Ventilkörpers wird deutlich, daß die Erfindung ein billiges und funktionstüchtiges Regel- und Anzeigeorgan für ein Kochgefäß der eingangs bezeichneten Art geschaffen hat, das darüber hinaus, durch einen Fachmann, auch schnell an dem Deckel auswechselbar ist.

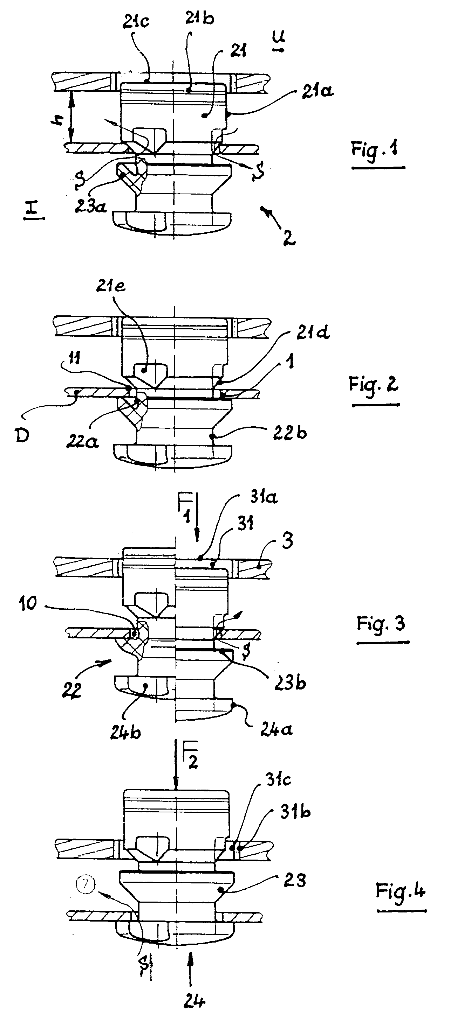

Die Erfindung wird nachstehend an Hand der Zeichnung an einem Ausführungsbeispiel näher erläutert. Es zeigen
- Fig.1 bis Fig.4: ein erfindungsgemäßes Ventil in seinen verschiedenen Betriebsstellungen in schematischer Darstellung.

Von einem mit Überdruck in seinem Inneren I arbeitenden Kochgefäß ist in der Zeichnung gemäß Fig.1 bis 4 lediglich ein begrenzter, geschnittener Bereich eines Deckels D angedeutet, in dem sich eine Ventilöffnung 1 befindet, welche das Innere I mit der Umgebung U strömungstechnisch verbindet und von einem Ventilkörper 2 gesteuert wird. Der Deckel D ist in bekannter Weise mit dem Kochgefäß verriegelbar, zumeist durch einen randständigen Bajonettverschluß. Die Einzelheiten hierzu sind allgemein bekannt und in der Zeichnung nicht berücksichtigt.

In einer Höhe h über dem Deckel D beabstandet befindet sich eine Führung 3 für den Ventilkörper 2, die in geeigneter Weise an dem Deckel D befestigt ist, beispielsweise mittels Widerstands-Punktschweißung. Der Ventilkörper 2 ist dabei mit seinem als zylindrischer Ventilkolben 21 ausgebildeten oberen Bereich in der Führung 3 in einer Lagerbohrung 31 leicht längsbeweglich gelagert. Auf der Mantelfläche 21a des Ventilkolbens 21 sind zwei Ringrillen 21b eingetieft, die eingefärbt sein können, um die Höhenstellung des Ventilkörpers 2 leicht zu erkennen (Fig.3 und 4). Befindet sich der Ventilkolben 21 soweit unterhalb der Führung 3, daß die Ringrillen 21b nicht sichtbar sind (Fig.1 und 2), dann bietet der Abstand der oberen Stirnfläche 21c des Ventilkolbens 21 von der Oberkante 31a der Lagerbohrung 31 einen genügenden optischen Anhalt für den Betreiber, welcher Betriebszustand gerade herrscht. Die Anzeigefunktion wird noch verbessert, wenn die Lochlaibung 31b der Lagerbohrung 31 eingefärbt ist. Eine entsprechende Plattierung 31c ist in der Zeichnung angedeutet. Die Zeichnung macht deutlich, daß die Anordnung des Ventilkörpers 2 mit Bezug auf die Führung 3 so getroffen ist, daß in allen Betriebsstellungen des Ventils der Ventilkolben 21 niemals vollständig außer Eingriff mit der Lagerbohrung 31 kommt.

Eine weitere Lagerung des Ventilkörpers 2 findet in der Ventilöffnung 1 statt, in der entweder (Fig.2 bis 4) ein zu dem Ventilkolben 21 konzentrischer Ventilschaft 22 mit Spiel geführt ist oder (Fig.1) eine kegelförmige Einziehung 21d des Ventilkolbens 21 zentrierend anliegt. Der Ventilschaft 22 ist in einen ersten Schaftbereich 22a zwischen dem Ventilkolben 21 und einem am Umfang des Ventilkörpers 2 umlaufenden Regelkragen 23 und in einen weiteren Schaftbereich 22b zwischen dem Regelkragen 23 und einem Anschlagstück 24 an dem von dem Stellkolben 21 abgewandten Ende des Ventilkörpers 2 aufgeteilt, und sein die Ventilöffnung 1 durchsetzender Durchmesser ist so bemessen, daß zwischen dem Ventilschaft 22 und der Ventilöffnung 1 ein Ringraum 10 verbleibt, der als Strömungsverbindung S zwischen dem Inneren I des Kochgefäßes und der Umgebung U dient; die Strömungsverbindung(en) S ist/sind in der Zeichnung (Fig.1, 3 und 4) durch Richtungspfeile veranschaulicht.

Liegt der Ventilkörper 2 beim Ankochen oder nach einer Abkühlung des Kochgefäßes durch sein Eigengewicht mit seiner Einziehung 21d auf der Ventilöffnung 1 auf, weil der Druck im Inneren I des Kochgefäßes abgesunken ist, dann bleibt entsprechend Fig.1 eine Strömungsverbindung S gleichwohl erhalten, wenn am Umfang der Einziehung 21d verteilte und bis in die Mantelfläche 21a reichende erste Ausnehmungen 21e in den Ventilkolben 21 eingeschnitten sind. Der Regelkragen 23 ist durch den Ventilschaft 22 von dem Ventilkolben 21 axial so weit beabstandet, daß er nicht an dem Deckel D anliegt, wenn die Einziehung 21d wie in Fig.1 auf der Ventilöffnung 1 aufliegt, so daß ungehindert Strömungsmedium durch die Strömungsverbindung S zu- und abströmen kann. Insbesondere wird (Fig.1 rechts) nach einem Abkühlen des Kochgefäßes Luft aus der Umgebung U durch den Ringraum 10 angesaugt, so daß kein das Öffnen des Kochgefäßes hemmender Unterdruck in seinem Inneren I entstehen kann. Andererseits (Fig.1 links) wird beim Ankochen zunächst die gesamte Luft über dem Kochgut ausgetrieben und sukzessive durch Wasserdampf ersetzt, was zur Geschmacks- und Geruchsverbesserung des Kochgutes beiträgt; das Ventil wirkt also auch als ein sogenanntes Aromaventil.

Der Regelkragen 23 ist in der Form eines Lippendichtringes entsprechend Fig.1 und 2 als (im Querschnitt) schräg nach außen und nach oben weisende Dichtlippe 23a ausgebildet, die in eine den Ventilkörper 2 radial umlaufende Ringkante 23b ausläuft. Bei zunehmendem Druck im Inneren I des Kochgefäßes schlägt die Ringkante 23b an der Unterseite des Deckels D an (Fig.2) und unterbricht die Strömungsverbindung S zwischen dem Kochgefäß und der Umgebung U. Die Anordnung ist so eingerichtet, daß dieser Betriebszustand leicht erkennbar ist, indem dann die Stirnfläche 21c gerade bündig mit der Oberkante 31a der Führung 3 ist (Fig.2). Das Ankochen beginnt bei dieser Stellung des Ventilkörpers 2 und führt zu einer weiteren Drucksteigerung im Inneren I, bis der eigentliche, unter Überdruck erfolgende Kochvorgang einsetzt; der zugehörige Betriebsdruck ist an dem Ventilkolben 21 ablesbar, dessen Ringrillen 21b sichtbar werden (Fig.3 links). Dabei wird die Dichtlippe 23a gegen ihren Verformungswiderstand so weit verformt, bis sie kreisringförmig-flächig an der Unterseite des Deckels D anliegt. Die Wärmezufuhr zu dem Kochgefäß wird gleichzeitig gedrosselt, damit ein den zugehörigen Betriebsdruck übersteigender Druck im Inneren I des Kochgefäßes vermieden wird.

In der Fig.3 ist (rechts) angedeutet, daß das Kochgefäß bequem entlüftet werden kann, wenn von Hand eine Entlüftungskraft F₁ auf die Stirnfläche 21c des Ventilkolbens 21 in Pfeilrichtung aufgebracht wird, bis der Regelkragen 23 von dem Deckel D wieder beabstandet ist; die Entlüftungskraft F₁ wird ohne Schwierigkeit durch den nachfolgenden Anschlag der Einziehung 21d an der Oberkante 11 der Ventilöffnung 1 bestimmt, den der Betreiber auch ohne Sichtverbindung sicher wahrnimmt. Auch danach (Fig.1, Fig.3 rechts) wird das Innere I weiter entlüftet über die ersten Ausnehmungen 21e.

Nimmt der Druck in dem Kochgefäß über den zulässigen Betriebsdruck hinaus weiter zu, wenn beispielsweise die Wärmezufuhr nicht unterbrochen oder gedrosselt wird, dann wird der Regelkragen 23 durch die Ventilöffnung 1 getrieben, deren Ringraum 10 entsprechend bemessen ist. Das Anschlagstück 24 legt sich dann (Fig.4) an die Ventilöffnung 1 an; es ist erfindungsgemäß ausreichend formstabil, so daß es nicht gleichfalls unter Druck durch die Ventilöffnung 1 ausgetrieben werden kann. Andererseits befinden sich an seinem radialen Umfang 24a zweite Ausnehmungen 24b, die erneut eine Strömungsverbindung S zwischen dem Inneren I und der Umgebung U herstellen, so daß der unzulässige Druck in dem Kochgefäß rasch abgebaut wird. Auf diese Weise verkörpert das erfindungsgemäße Ventil also auch ein Sicherheitsventil.

Die in der Fig.4 eingezeichnete Stellung des Ventilkörpers 2 in der Ventilöffnung 1 ist stabil, kann aber in die Betriebsstellung der Fig.1 und 2 zurückgeführt werden: von Hand wird durch eine auf die Stirnfläche 21c des die Führung 3 weit überragenden Ventilkolbens 21 aufgebrachte Rückstellkraft F₂ der Ventilkolben 21 entsprechend in Pfeilrichtung zurückgestellt, wobei der Regelkragen 23 wieder durch die Ventilöffnung 1 in das Innere I gerät.

### Aufstellung der Bezugszeichen

- 1: Ventilöffnung
- 10: Ringraum
- 11: Oberkante
- 2: Ventilkörper
- 21: Ventilkolben
- 21a: Mantelfläche
- 21b: Ringrille
- 21c: Stirnfläche
- 21d: Einziehung
- 21e: (erste) Ausnehmung
- 22: Ventilschaft
- 22a: (erster) Schaftbereich
- 22b: (zweiter) Schaftbereich
- 23: Regelkragen
- 23a: Dichtlippe
- 23b: Ringkante
- 24: Anschlagstück
- 24a: Umfang
- 24b: (zweite) Ausnehmung
- 3: Führung
- 31: Lagerbohrung
- 31a: Oberkante
- 31b: Lochlaibung
- 31c: Plattierung, Farbmarkierung
- h: Höhe
- D: Deckel
- F₁: Entlüftungskraft
- F₂: Rückstellkraft
- I: Inneres
- S: Strömungsverbindung
- U: Umgebung

## Patentansprüche

1. Ventil für ein mit Überdruck betriebenes, mit einem Deckel (D) verschließbares Kochgefäß oder dergleichen, beispielsweise einen_Dampfdrucktopf, mit einem Ventilkörper (2), der in einer in dem Deckel (D) befindlichen Ventilöffnung (1), mit dieser achsfluchtend und -beweglich, angeordnet ist und die verschiedenen Betriebszustände des Kochgefäßes anzeigt, steuert und überwacht, wobei der Ventilkörper (2) einen außerhalb des Kochgefäßes befindlichen Ventilkolben (21), einen die Ventilöffnung (1) steuernden, bei einem den Betriebsdruck überschreitenden Druck in dem Kochgefäß durch die Ventilöffnung (1) gleitenden, sonst innerhalb des Kochgefäßes befindlichen Regelkragen (23) und ein beständig innerhalb des Kochgefäßes verbleibendes, formstabiles Anschlagstück (24) aufweist, wobei das Anschlagstück (24), die Ventilöffnung (1) abdeckend, an dem Deckel (D) anschlägt, wenn der Regelkragen (23) die Ventilöffnung (1) passiert hat,
dadurch gekennzeichnet, daß
zumindest der Regelkragen (23) aus einem elastischen Werkstoff besteht, und daß der Ventilkolben (21) mit Mitteln zur Druckenzeuge versehen ist.

2. Ventil nach Anspruch 1, dadurch gekennzeichnet, daß die Ventilöffnung (1) außerhalb des Kochgefäßes von einer an dem Deckel (D) befestigten und von diesem beabstandeten Führung (3) für den Ventilkörper (2) überfangen ist, die eine zu der Ventilöffnung (1) achsfluchtende kreiszylindrische Lagerbohrung (31) für den Ventilkolben (21) aufweist und deren Lochlaibung (31b) als Indikator für den drucklosen Zustand des Kochgefäßes dient.

3. Ventil nach Anspruch 2, dadurch gekennzeichnet, daß die Lochlaibung (31b) mit einer Farbmarkierung (31c) versehen ist.

4. Ventil nach einem der Ansprüche 1 bis 3, dadurch gekennzeichnet, daß an dem Ventilkolben (21) in an sich bekannter Weise umlaufende Ringrillen (21b) oder ähnliche Markierungen angebracht sind.

5. Ventil nach einem der Ansprüche 1 bis 4, dadurch gekennzeichnet, daß der Ventilkolben (21) in Richtung auf das Kochgefäß eine als Regelkante dienende, vorzugsweise kegelstumpfförmige Einziehung (21d) aufweist, die mit der Ventilöffnung (1) zusammenwirkt.

6. Ventil nach Anspruch 5, dadurch gekennzeichnet, daß der Ventilkolben (21) im Bereich der Einziehung (21d) mit mindestens einer an seinem Umfang achsparallel verlaufenden Ausnehmung (21e) versehen ist, die eine Strömungsverbindung (S) des Kochgefäßes mit der Umgebung (U) bei an der Ventilöffnung (1) angeschlagener Einziehung (21d) ausbildet.

7. Ventil nach einem der Ansprüche 1 bis 6, dadurch gekennzeichnet, daß der Regelkragen (23) in Form eines ungestört umlaufenden, im entlasteten Zustand von der Symmetrieachse des Ventilkörpers (2) schräg nach außen gerichteten, unter einem Überdruck in dem Kochgefäß elastisch verformbaren Lippendichtringes an dem Ventilkörper (2) angeformt ist, dessen Dichtlippe (23a) in eine an den Deckel (D) anlegbare, die Ventilöffnung (1) dabei von dem Inneren (I) des Kochgefäßes strömungstechnisch trennende Ringkante (23b) ausläuft.

8. Ventil nach einem der Ansprüche 1 bis 7, dadurch gekennzeichnet, daß das Anschlagstück (24) an der in dem Inneren (I) des Kochgefäßes befindlichen Stirnseite des Ventilkörpers (2) als die Ventilöffnung (1) abdeckende Platte ausgebildet ist.

9. Ventil nach einem der Ansprüche 1 bis 8, dadurch gekennzeichnet, daß das Anschlagstück (24) mit mindestens einer an seinem Umfang (24a) achsparallel verlaufenden Ausnehmung (24b) versehen ist, die eine Strömungsverbindung (S) des Kochgefäßes mit der Umgebung (U) bei an der Ventilöffnung (1) anliegendem Anschlagstück (24) ausbildet.

10. Ventil nach einem der Ansprüche 1 bis 9, dadurch gekennzeichnet, daß der Ventilkörper (2) durchweg aus einem oder mehreren elastischen Werkstoffen besteht.

## Claims

1. A valve for a cooking utensil or the like operated at overpressure and closable by a lid (**D**), for example a steam-pressure vessel, having a valve member (2) which is arranged in a valve opening (1) provided in the lid (**D**), so as to be axially movable and axially in alignment with the said valve opening (1), and which displays, controls and monitors the various operating states of the cooking utensil, wherein the valve member (2) comprises a valve piston (21) situated outside the cooking utensil, a regulating collar (23), which controls the valve opening (1), slides through the valve opening (1) in the event of a pressure in the cooking utensil exceeding the operating pressure and is otherwise present inside the cooking utensil, and a dimensionally rigid stop member (24) which remains permanently inside the cooking utensil, and wherein the stop member (24), covering the valve opening (1), strikes against the lid (**D**) when the regulating collar (23) has passed the valve opening (1), **characterized in that** at least the regulating collar (23) consists of a resilient material, and the valve piston (21) is provided with means for indicating the pressure.

2. A valve according to Claim 1, **characterized in that** the valve opening (1) is covered outside the cooking utensil by a guide (3) - secured to the lid (**D**) and spaced therefrom - for the valve member (2), the said guide (3) having a circular cylindrical bearing bore (31) axially in alignment with the valve opening (1) for the valve piston (21) and the inside of the hole (31b) of the said guide (3) acting as an indicator of the state of the cooking utensil without pressure.

3. A valve according to Claim 2, **characterized in that** the inside of the hole (31b) is provided with a coloured marking (31c).

4. A valve according to one of Claims 1 to 3, **characterized in that** annular corrugations (21b) extending in a manner known *per se* or similar markings are provided on the valve piston (21).

5. A valve according to one of Claims 1 to 4, **characterized in that** the valve piston (21) is provided in the direction towards the cooking utensil with a preferably frustoconical taper (21d) acting as a control edge and cooperating with the valve opening (1).

6. A valve according to Claim 5, **characterized in that** the valve piston (21) is provided in the region of the taper (21d) with at least one recess (21e) which extends axially parallel over its periphery and which forms a flow connexion (**S**) of the cooking utensil to the surrounding atmosphere (**U**) when the taper (21d) strikes against the valve opening (1).

7. A valve according to one of Claims 1 to 6, **characterized in that** the regulating collar (23) is integrally moulded on the valve member (2) in the form of a lipped sealing ring which is continuous when undisturbed and is directed obliquely outwards from the axis of symmetry of the valve member (2) in the released state and which is resiliently deformable under an overpressure in the cooking utensil and the sealing lip (23a) of which terminates in an annular edge (23b) which can abut against the lid (**D**) and which separates the valve opening (1) from the interior (**I**) of the cooking utensil in terms of flow dynamics.

8. A valve according to one of Claims 1 to 7, **characterized in that** the stop member (24) is constructed in the form of a plate covering the valve opening (1) on the end face of the valve member (2) situated in the interior (**I**) of the cooking utensil.

9. A valve according to one of Claims 1 to 8, **characterized in that** the stop member (24) is provided with at least one recess (24b) which extends axially parallel over its periphery (24a) and which forms forms a flow connexion (**S**) of the cooking utensil to the surrounding atmosphere (**U**) when the stop member (24) rests against the valve opening (1).

10. A valve according to one of Claims 1 to 9, **characterized in that** the valve member (2) consists entirely of one or more resilient materials.

## Revendications

1. Soupape pour un récipient de cuisson ou analogue, pouvant être fermé par un couvercle (D), fonctionnant en surpression, par exemple un autocuiseur, pourvu d'un corps de soupape (2), qui est placé dans une ouverture de soupape (1) se trouvant dans le couvercle (D), aligné et mobile sur son axe, et qui indique, commande et surveille les différents états de fonctionnement du récipient de cuisson, le corps de soupape (2) comportant un piston de soupape (21) se trouvant à l'extérieur du récipient, un collet de réglage (23) commandant l'ouverture de soupape (1), coulissant à travers l'ouverture de soupape (1), si la pression dans le récipient de cuisson dépasse la pression de service, sinon se trouvant à l'intérieur du récipient de cuisson, et une butée (24) indéformable restant en permanence à l'intérieur du récipient de cuisson, la butée (24), recouvrant l'ouverture de soupape (1), butant contre le couvercle (D), si le collet de réglage (23) a passé l'ouverture de soupape (1), caractérisée en ce que au moins le collet de réglage (23) est composé d'un matériau élastique et que le piston à soupape (21) est pourvu de moyens d'indication de pression.

2. Soupape selon la revendication 1, caractéristée en ce que l'ouverture de soupape (1) est doublée au-dehors du récipient de cuisson par un guidage (3) pour le corps de soupape (2), fixé au couvercle (D) et écarté de celui-ci, ce guidage comportant un perçage à palier cylindrique circulaire (31), qui est aligné sur l'axe de l'ouverture de soupape (1), pour le piston de soupape (21) et dont la paroi (31b) sert d'indicateur pour l'état sans pression du récipient de cuisson.

3. Soupape selon la revendication 1, caractérisée en ce que la paroi du trou (31b) est pourvue d'un marquage de couleur (31c).

4. Soupape selon l'une des revendications 1 à 3, caractérisée en ce que sont ménagés sur le piston de soupape (21) des rainures annulaires (21b) ou des marquages semblables.

5. Soupape selon l'une des revendications 1 à 4, caractérisée en ce que le piston de soupape (21) comporte, en direction du récipient de cuisson, un rétrécissement (21d), de préférence de forme tronconique, servant d'arête de réglage, qui coopère avec l'ouverture de soupape (1).

6. Soupape selon la revendication 5, caractérisée en ce que le piston de soupape (21) est pourvu à sa périphérie et dans la zone du rétrécissement (21d), d'au moins un creux (21e) parallèle à l'axe, qui forme une liaison d'écoulement (S) du récipient de cuisson avec l'environnement (U), lorsque le rétrécissement (21d) est en butée contre l'ouverture de soupape (1).

7. Soupape selon l'une des revendications 1 à 6, caractérisée en ce que le collet de réglage (23) est formé sur le corps de soupape (2) sous la forme d'un joint d'étanchéité à lèvre déformable élastiquement en cas de surpression dans le récipient de cuisson, tournant librement, à l'état déchargé dirigé obliquement par rapport à l'axe de symétrie du corps de soupape (2) vers l'extérieur, la lèvre d'étanchéité (23a) se répandant dans une arête annulaire (23b), qui peut s'appliquer contre le couvercle (D), séparant ainsi selon la technique des fluides l'ouverture de soupape (1) de l'intérieur (I) du récipient de cuisson.

8. Soupape selon l'une des revendications 1 à 7, caractérisée en ce que la butée (24) est formée sur la face du corps de soupape qui se trouve à l'intérieur (I) du récipient de cuisson comme plaque de couverture de l'ouverture de soupape (1).

9. Soupape selon l'une des revendications 1 à 8, caractérisée en ce que la butée (24) est pourvue à sa périphérie d'au moins un creux (24b) parallèle à l'axe (24a), qui forme une liaison par écoulement (S) du récipient de cuisson avec l'environnement (U), lorsque la butée (24) repose sur l'ouverture de soupape (1).

10. Soupape selon l'une des revendications 1 à 9, caractérisée en ce que le corps de soupape (2) est généralement constitué d'un ou plusieurs matériaux élastiques.
